# EUROPEAN PATENT SPECIFICATION

(11) **EP 3 587 153 B1**
(45) Date of publication and mention of the grant of the patent: **11.08.2021**
(21) Application number: 19181049.8
(22) Date of filing: 18.06.2019
(51) Int. Cl.: B60H 1/00, F04D 29/42, B60H 3/06, F04D 29/28

(54) **BLOWER FOR VEHICLE AIR CONDITIONER**
GEBLÄSE FÜR EINE FAHRZEUGKLIMAANLAGE
PULSEUR D'ASPIRATION POUR UN DISPOSITIF DE CHAUFFAGE, VENTILATION ET/OU CLIMATISATION D'UN VEHICULE

(30) Priority: 25.06.2018 JP 2018120190
(43) Date of publication of application: 01.01.2020
(73) Proprietor: Valeo Japan Co., Ltd., Kumagaya-shi, Saitama 360-0193 (JP)
(72) Inventor: ARAKI, Daisuke, SAITAMA, 360-0193 (JP)
(74) Representative: Tran, Chi-Hai

(56) References cited:
- WO-A1-2018/074339
- JP-A- H11 235 913
- KR-B1- 101 430 000
- US-A1- 2012 214 394
- US-A1- 2016 355 069

## Description

### BACKGROUND OF THE INVENTION

### 1. Field of the Invention

The present invention relates to a blower for a vehicular air conditioner.

### 2. Description of the Related Art

A vehicular air conditioner operable in an inside and outside air dual-layer-flow mode (hereinafter simply referred to as dual-layer-flow mode) is known (see, for example, JP-A-2017-505397). This vehicular air conditioner includes a blower, a heat exchange unit, and an air distribution unit. The heat exchange unit includes heat exchangers for air conditioning (such as heating, cooling, and dehumidifying). The air distribution unit includes a plurality of outlets to distribute air conditioned in the heat exchange unit to areas inside a cabin. When the air conditioner operates in the dual-layer-flow mode, inside air and outside air separately sent out of the blower flows through an upper passage and a lower passage of the heat exchange unit to the air distribution unit and is blown into the cabin.

The blower includes an air intake housing with an outside air inlet and an inside air inlet each closable by at least one door. In order to filtrate air taken into the air intake housing, a filter is disposed in the air intake housing. In the dual-layer-flow mode, outside air taken in from the outside air inlet passes through the filter, and then, from a suction port of a scroll housing, the outside air is drawn outside of a separation cylinder inserted in the scroll housing and enters the scroll housing. Passing through an upper half of an impeller, the outside air is blown toward the upper passage. Inside air taken in from the inside air inlet passes through the filter, and then, the inside air is drawn inside of the separation cylinder and enters the scroll housing. Passing through a lower half of the impeller, the inside air is blown toward the lower passage. In order to prevent the outside air and the inside air from mixing at an upstream side of the filter in the dual-layer-flow mode, a space at an upstream side of the filter inside of the air intake housing is divided by a separation wall into a portion where the outside air passes and a portion where the inside air passes in the dual-layer-flow mode. An upper end of the separation cylinder is close to an air outflow surface, which is a lower surface of the filter. A lower end of the separation wall is close to an air inflow surface, which is an upper surface of the filter.

In some cases, along with the outside air, a large piece of dust such as a dead leaf may enter the air intake housing and remain on the upper surface of the filter (see JP-A-2015-217750). When a dirty used filter is drawn from a slot of the air intake housing to replace with a new filter, the large piece of dust on the upper surface of the filter may be blocked by the lower end of the separation wall, and stop remaining on the filter and fall down from the filter into, for example, the scroll housing.

WO 2018/074339 A1 discloses a blower for a vehicular air conditioner operable in a dual-layer-flow mode with a separation wall provided in the air intake housing wherein the separation wall separates the outside air and the inside air.

### SUMMARY OF THE INVENTION

An object of the invention is to provide a blower for a vehicular air conditioner operable in the dual-layer-flow mode that reduces a possibility of dust, for example, a large piece of dust such as a leaf on an upper surface of a filter falling down from the filter when the filter is detached from an air intake housing.

To accomplish the above object, according to the invention, it is provided a blower according to claim 1. Consequently, even when a large piece of dust such as a leaf on the air inflow surface of the filter comes into contact with a lower end portion of the separation wall while the filter is being drawn out, a possibility of the large piece of dust falling down from the air inflow surface of the filter can be decreased.

### BRIEF DESCRIPTION OF THE DRAWINGS

Fig. 1 is a schematic meridian cross-sectional view of a blower for a vehicular air conditioner, taken along a vertical plane extending in a fore-and-aft direction.
Fig. 2 is a schematic perspective view of the blower in Fig. 1, illustrating a configuration of an upper side of a filter of the blower.
Fig. 3 is a front view of a separation wall.
Fig. 4 is a plan view of a first region and a second region on an air inflow surface of the filter.
Fig. 5A is a diagram illustrating contact between the separation wall and large pieces of dust.
Fig. 5B is a diagram illustrating contact between the separation wall and a large piece of dust.
Fig. 5C is a diagram illustrating contact between the separation wall and a large piece of dust and not being part of the invention.

### DESCRIPTION OF THE PREFERRED EMBODIMENTS

An embodiment of a blower for a vehicular air conditioner according to the invention will be described below with reference to the accompanying drawings. In each of the drawings, reference sign R denotes a right side of a vehicle, reference sign L denotes a left side of the vehicle, reference sign Fr denotes a front side of the vehicle, reference sign Rr denotes a rear side of the vehicle, reference sign U denotes an upper side of the vehicle, and reference sign D denotes a lower side of the vehicle. In many cases, the blower is installed in the vehicle in a direction illustrated in the drawings. However, an installation direction of the blower is not limited to the illustrated example. For example, the blower may be somewhat inclined with respect to the illustrated direction (insofar as an air inflow surface of the filter faces upward).

The blower includes an air intake housing 10 having an outside air inlet 11 to take in outside air and at least one inside air inlet (a first inside air inlet 12 and a second inside air inlet 13 in the illustrated example) to take in inside air.

Inside air and/or outside air taken in from two of the outside air inlet 11, the first inside air inlet 12, and the second inside air inlet 13 is passed through a filter 50. The air intake housing 10 includes a filter support 14 to make an air inflow surface 51 of the filter 50 face upward. The filter support 14 may be formed, for example, as a slot where the filter 50 is supported slidably in a fore-and-aft direction. A filter insertion hole 15 is formed in an outer wall of a rear portion of the air intake housing 10 at a position corresponding to the filter support 14.

Of an internal space of the air intake housing 10, a space above the air inflow surface 51 of the filter 50 is divided into a front first space 16A and a rear second space 16B by a separation wall 20. The outside air inlet 11 and the first inside air inlet 12 are open toward the first space 16A, and the second inside air inlet 13 is open toward the second space 16B. The separation wall 20 includes a communication hole 21 to allow the first space 16A and the second space 16B to communicate with each other.

The air intake housing 10 includes a plurality of switching doors; in the illustrated embodiment in particular, a first switching door 18 and a second switching door 19. The first switching door 18 opens one of the outside air inlet 11 and the first inside air inlet 12 and closes the other. The second switching door 19 opens one of the communication hole 21 and the second inside air inlet 13 and closes the other.

A rotary door is employed as the first switching door 18, and a cantilever door is employed as the second switching door 19. The term "rotary door" refers to a door including a curved wall (a wall to open and close the air inlets) separate from a rotary shaft (18s). The term "cantilever door" refers to a door extending in one direction from a rotary shaft (19s) and including a wall to open and close the air inlets.

The air inflow surface 51 of the filter 50 supported at an appropriate position by the filter support 14 is divided into a first region 51A facing the first space 16A and a second region 51B facing the second space 16B by a lower end 23 of the separation wall 20. That is, the first region 51A and the second region 51B are defined by a positional relationship between the filter 50 supported at the appropriate position by the filter support 14 and the lower end portion of the separation wall 20.

In a lower portion of the air intake housing 10, a scroll housing 30 is disposed as a casing of the blower, which is a single-inlet centrifugal blower in the illustrated embodiment. At least part of the scroll housing 30 may be integrally formed to at least part of the air intake housing 10.

A suction hole 31 also called a bell-mouth is formed in a center portion of an upper surface of the scroll housing 30. Through the suction hole 31, the air that has passed through the filter 50 is drawn into the scroll housing 30.

An impeller 40 is accommodated in a center portion of an internal space of the scroll housing 30. The impeller 40 is drivingly rotated about a rotation axis Ax extending in a vertical direction by an electric motor 45. The impeller 40 includes a blade cascade 41 having a plurality of blades arranged in a circumferential direction about the rotation axis Ax.

A partition wall 33 protrudes from an outer peripheral wall of the scroll housing 30 toward the center of the scroll housing 30 and extends over the substantially entire circumference of the scroll housing 30. The partition wall 33 divides an outward region of the internal space of the scroll housing 30 in a radial direction of the impeller 40 into an upper first air passage 32A and a lower second air passage 32B.

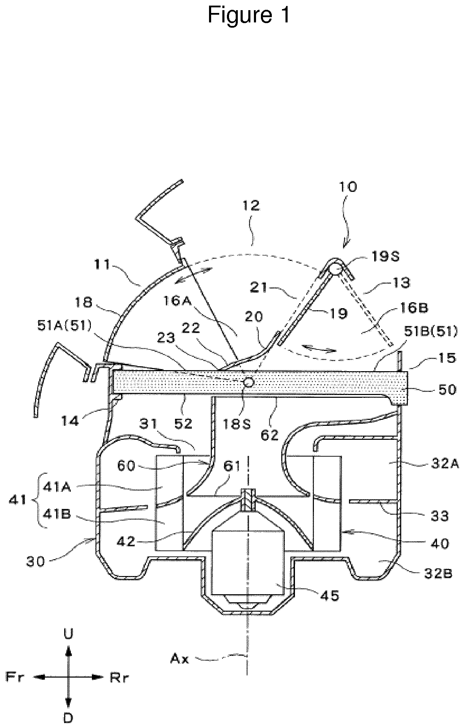

The partition wall 33 continuously extends to an outlet (not illustrated in a cross section of Fig. 1) of the scroll housing 30. That is, while vertically separated by the partition wall 33, the upper first air passage 32A and the lower second air passage 32B extend to the outlet, not illustrated, that is open in a direction perpendicular to the surface of a sheet of Fig. 1.

Although not illustrated, as known to one of ordinary skill in the art, air in the upper first air passage 32A and the lower second air passage 32B flows into an upper air passage and a lower air passage in a heat exchange unit in the vehicular air conditioner, passes through heat exchangers for air conditioning, flows into an air distribution unit, and is blown out of predetermined outlets (such as a defroster outlet, a ventilation outlet, and a foot outlet) into a cabin.

A separation cylinder 60 is inserted in the scroll housing 30 through the suction hole 31. A downstream end 61 of the separation cylinder 60 is located on an inner side in the radial direction of the blade cascade 41 of the impeller 40. An upstream end 62 of the separation cylinder 60 is open toward the vicinity of a downward-facing air outflow surface 52 of the filter 50. At least part of the separation cylinder 60 may be integrally formed to at least part of the air intake housing 10 and/or the scroll housing 30.

When the filter 50 is viewed from an upper side of the air inflow surface 51 of the filter 50, a contour of the upstream end 62 of the separation cylinder 60 substantially coincides with a contour of the second region 51B defined on the air inflow surface 51 of the filter 50 (which is equivalent to a contour of the lower end 23 of the separation wall 20).

Consequently, the air that has passed through the second region 51B of the filter 50 passes inside of the separation cylinder 60, flows into the scroll housing 30, and then flows into a second rotation-axis direction portion 41B of a lower side of the blade cascade 41 of the impeller 40. Then, the air flows into the lower second air passage 32B and is finally blown out of the scroll housing 30 through the outlet, not illustrated. When the air passes by the vicinity of a lower portion of the separation cylinder 60, an upper surface of a cone-shaped portion 42 of part of the impeller 40 and an inner surface of the lower portion of the separation cylinder 60 cause the air that has flowed downward in a direction of the rotation axis Ax to turn radially outward.

The air that has passed through the first region 51A of the filter 50 passes outside of the separation cylinder 60, flows into the scroll housing 30, and then flows into a first rotation-axis direction portion 41A of an upper side of the blade cascade 41 of the impeller 40. Then, the air flows into the upper first air passage 32A and is finally blown out of the scroll housing 30 through the outlet, not illustrated. When the air passes by the vicinity of the lower portion of the separation cylinder 60, an outer surface of the lower portion of the separation cylinder 60 causes the air that has flowed downward in the direction of the rotation axis Ax to turn radially outward.

When the air conditioner, namely, the blower is operated in the dual-layer-flow mode, the first switching door 18 opens the outside air inlet 11 and closes the first inside air inlet 12, and the second switching door 19 closes the communication hole 21 of the separation wall 20 and opens the second inside air inlet 13. Consequently, the outside air passes through the first region 51A of the filter 50, and the inside air passes through the second region 51B of the filter 50.

When the blower is operated in an outside air mode, the first switching door 18 opens the outside air inlet 11 and closes the first inside air inlet 12, and the second switching door 19 opens the communication hole 21 of the separation wall 20 and closes the second inside air inlet 13. Consequently, outside air passes through the first region 51A and the second region 51B of the filter 50.

When the blower is operated in an inside air mode, the first switching door 18 closes the outside air inlet 11 and opens the first inside air inlet 12, and the second switching door 19 closes the communication hole 21 of the separation wall 20 and opens the second inside air inlet 13. Consequently, inside air passes through the first region 51A and the second region 51B of the filter 50.

It should be noted that in the outside air mode, after temporarily entering the first space 16A, the outside air passes through the communication hole 21 of the separation wall 20 and flows into the second space 16B. At this time, when the communication hole 21 has a small opening area, flowing resistance of the air is increased to decrease a flow rate of the outside air that passes through the second space 16B and the second region 51B and outside of the separation cylinder 60 and flows into the scroll housing 30. Meanwhile, as described in detail later, it is difficult to increase a width (a width in a lateral direction) of the second region 51B defined by the lower end 23 of the separation wall 20 so as to prevent a large piece of dust from falling down from the air inflow surface 51 when the filter 50 is pulled out. Consequently, it is also difficult to increase a width of a lower end portion of the communication hole 21 in the lateral direction. In order to increase the opening area of the communication hole 21 in spite of limitation of the size of this lower end portion, a lateral width W2 of the communication hole 21 is made relatively small at the lower end portion and gradually increased upward. This makes it possible to increase the opening area of the communication hole 21 without increasing the lateral width of the second region 51B.

When the blower is operated in the dual-layer-flow mode and the outside air mode, there is a possibility that a piece of dust of a relatively large size (hereinafter referred to as "large dust") such as a leaf may be drawn into the air intake housing 10 along with the outside air. The large dust remains on (is caught by) the air inflow surface 51 of the filter 50. The large dust may exist either in the first region 51A or in the second region 51B.

Next, setting of the first region 51A and the second region 51B of the air inflow surface 51 of the filter 50 will be described. It is obvious from the definition of the first region 51A and the second region 51B that a boundary line 51C between the first region 51A and the second region 51B (hereinafter also referred to as "contour line 51C" of the second region 51B) substantially coincides with a shape of the lower end 23 of the separation wall 20 in close vicinity of the air inflow surface 51 of the filter 50 supported at the appropriate position by the filter support 14.

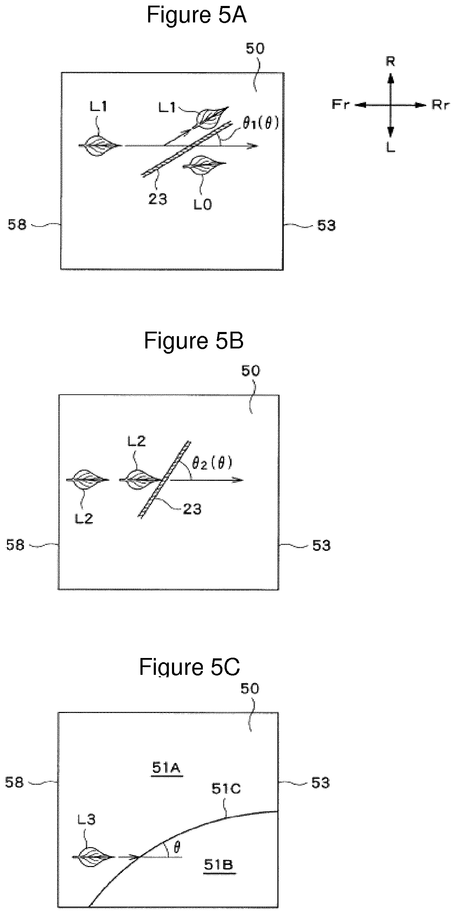

When the filter 50 is drawn from the filter support 14 through the filter insertion hole 15, the filter 50 moves rearward (in the Rr direction) . Consequently, as in the case of large dust L0 illustrated in Fig. 5A, when a straight line drawn from the large dust rearward (that is, in the Rr direction, which is a drawn direction of the filter 50) reaches a rear edge 53 of the air inflow surface 51 without coming into contact with or intersecting the boundary line 51C, the large dust does not come into contact with the lower end 23 of the separation wall 20 until the filter 50 is completely pulled out of the filter support 14. Therefore, the large dust at such a position on the air inflow surface 51 remains on the air inflow surface 51 of the filter 50 without falling down from the filter 50 until drawing of the filter 50 is completed.

As in the case of large dust L1 illustrated in Fig. 5A and large dust L2 illustrated in Fig. 5B, for example, when a straight line drawn from the large dust rearward comes into contact with or intersects the boundary line 51C, the large dust comes into contact with the lower end 23 (or its vicinity) of the separation wall 20 until the filter 50 is completely pulled out of the filter support 14. It mainly depends on a contact angle (θ) between the large dust and the lower end 23 of the separation wall 20 (it does not necessarily depend only on the contact angle (θ)) whether the large dust at such a position on the air inflow surface 51 remains on the air inflow surface 51 of the filter 50 until drawing of the filter 50 is completed.

In this description, the contact angle (θ) refers to an angle between a straight line drawn in the drawing direction of the filter 50 from large dust and the lower end 23 of the separation wall 20 (or the boundary line 51C) at a position where the straight line intersects the lower end 23 (or the boundary line 51C).

As illustrated in Fig. 5A, in the case of a relatively small contact angle (θ1), even when the large dust L1 collides with the lower end 23 of the separation wall 20 while the filter 50 is being drawn out, the large dust L1 is pushed by the lower end 23 of the separation wall 20 and displaced on the air inflow surface 51 of the filter 50 in a lateral direction (rightward in Fig. 5A) without being stopped by the lower end 23 of the separation wall 20 (that is, without being caught by the lower end 23 of the separation wall 20). In other words, until drawing of the filter 50 is completed, the large dust L1 remains on the air inflow surface 51 of the filter 50 and does not fall down from the filter 50. In this case, it is a matter of course that the first region 51A to which the large dust L1 is to be displaced need to continuously extend from the position of the large dust L1 to the rear edge 53 of the air inflow surface 51.

As illustrated in Fig. 5B, in the case of a relatively large contact angle (θ2), when the large dust L2 collides with the lower end 23 of the separation wall 20 while the filter 50 is being drawn out, the large dust L2 cannot be displaced on the filter 50 in the lateral direction or is displaced by a short distance if possible. Thai is, until drawing of the filter 50 is completed, the large dust L2 remains to be stopped by the lower end 23 of the separation wall 20 and is displaced forward on the air inflow surface 51 of the filter 50 relative to the air inflow surface 51, and then, the large dust L2 finally falls down from the filter 50.

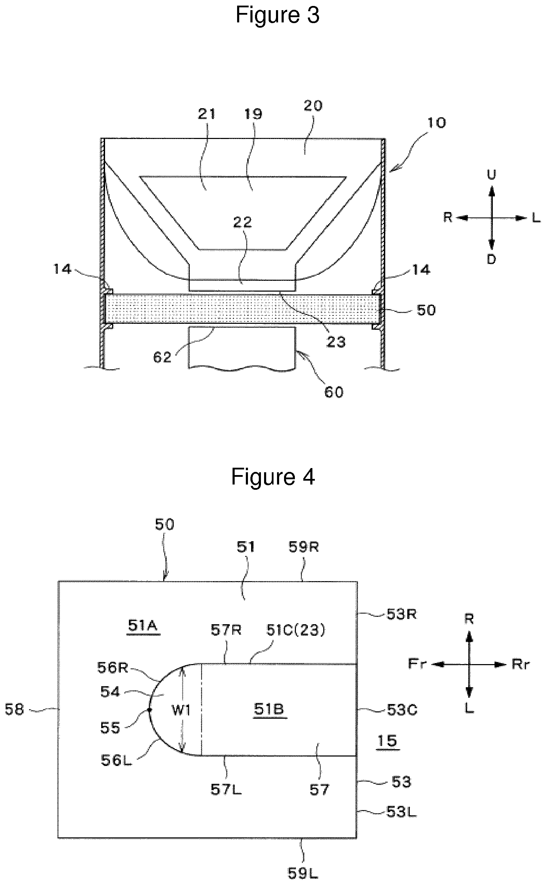

It is obvious from the above description that the smaller the contact angle (θ) is, the better. The contact angle (θ) is preferably 15 degrees or less, more preferably 10 degrees or less with respect to the drawing direction of the filter 50. However, in the configuration of the air intake housing 10 where the outside air inlet 11 is disposed at the front side and the inside air inlets 12 and 13 are disposed on the rear side, preferably, the second region 51B is positioned behind the first region 51A (a front end of the first region 51A is in front of a front end of the second region 51B) so as to smoothen air flows in the air intake housing 10. When this arrangement is adopted, the contact angle (θ) tends to be larger in the vicinity of the front end of the second region 51B. In view of this, description will be made on an arrangement and shapes of the first region 51A and the second region 51B illustrated in Fig. 4.

In the arrangement illustrated in Fig. 4, when the air inflow surface 51 of the filter 50 is viewed from an upper side, the first region 51A continuously extends from a front edge 58 to the rear edge 53 of the air inflow surface 51 of the filter 50, and at the same time, the second region 51B continuously extends from a front end 55 of the second region 51B to the rear edge 53 of the air inflow surface 51 (hereinafter this arrangement condition will be also referred to as "condition 1" for convenience). When this condition 1 is satisfied, no matter where on the air inflow surface 51 of the filter 50 large dust exists, "a probability that the large dust remains on the air inflow surface 51 of the filter 50 until drawing of the filter 50 is completed, and is removed from the blower" (hereinafter this probability will be referred to as "remaining probability" for convenience) does not become zero at least. The higher the remaining probability is, the better. Appropriate setting of conditions other than the condition 1, such as a distribution of the contact angle (θ), enables the remaining probability of the large dust at any position on the air inflow surface 51 to become closer to 100%.

As a typical example that does not satisfy the condition 1, the case in which the boundary line 51C passes through a point in Fig. 4 and continuously extends from a left edge 59L to a right edge 59R of the air inflow surface 51 can be considered (in this case, a region on a front side of the boundary line 51C is the first region 51A, and a region on a rear side of the boundary line 51C is the second region 51B). In this case, large dust at all positions in the first region 51A has a remaining probability of zero.

More specifically, in the embodiment illustrated in Fig. 4, the front end 55 of the second region 51B is located behind the front edge 58 of the air inflow surface 51 of the filter 50, and a rear end of the second region 51B is located at a center portion 53C of the rear edge 53 of the air inflow surface 51 of the filter 50 in the lateral direction. Meanwhile, the first region 51A extends rearward from the entire front edge 58 of the air inflow surface 51 of the filter 50, and is divided into two separate portions to extend rearward on left and right sides of the second region 51B and terminate at a left portion 53L and a right portion 53R of the rear edge 53 of the air inflow surface 51 of the filter 50.

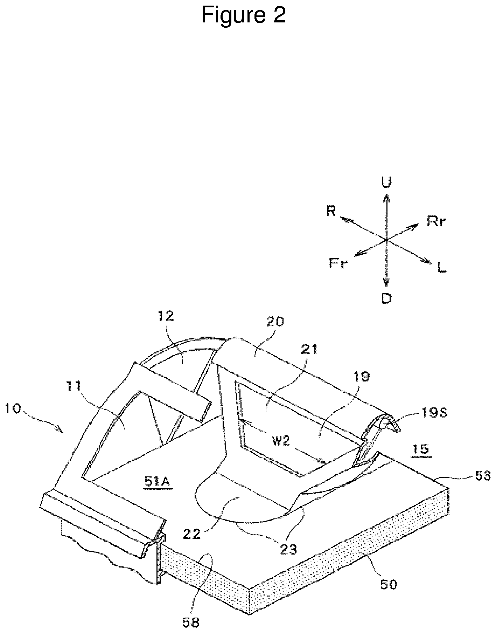

In the embodiment illustrated in Fig. 4, the second region 51B includes a front end portion 54 (this portion corresponds to a substantially tongue-shaped front end portion 22 of the separation wall 20 illustrated in Fig. 2) having a substantially semicircular contour (this forms part of the boundary line 51C) and a rear portion 57 behind the front end portion 54.

A contour of the rear portion 57 is formed by two straight lines 57L and 57R (these lines each form part of the boundary line 51C) extending in the fore-and-aft direction (the filter drawing direction). Consequently, whatever position in the second region 51B large dust occupies, a straight line drawn rearward from the large dust does not intersect the boundary line 51C, and thus, a remaining probability (remaining probability 1) of the large dust is substantially 100%. For similar reasons, a remaining probability (remaining probability 2) of large dust that exists in the rest of the first region 51A other than a region in front of the second region 51B before starting to pull out the filter 50 is substantially 100%.

Preferably, the two straight lines 57L and 57R that form the contour of the rear portion 57 extend in the fore-and-aft direction (the Fr-Rr direction in the coordinate system) strictly (although production errors are allowable). Thus, both of the remaining probability 1 and the remaining probability 2 described above can be made substantially 100%. However, the straight lines 57L and 57R may be at a small angle (corresponding to the contact angle (θ)) to the fore-and-aft direction.

When the contour of the rear portion 57 is set as described above, it is the shape of the front end portion 54 of the second region 51B (the boundary line 51C), that is, the shape of the lower end 23 (including the vicinity of the lower end 23) of the separation wall 20 that substantially affects the remaining probability of large dust on the air inflow surface 51 of the filter 50. The reason is that only a straight line drawn from large dust that exists in the region of the first region 51A in front of the second region 51B before starting to pull out the filter 50 intersects the boundary line 51C (in particular, the portion that corresponds to the semicircular front end portion 54).

In the embodiment illustrated in Fig. 4, the above-described contact angle (θ) has a maximum value of approximately 90 degrees at the front end 55 of the front end portion 54 of the second region 51B (the boundary line 51C). As a portion of a large contact angle (θ) is longer, large dust is more likely to be stopped by the lower end 23 of the separation wall 20 and left at the spot.

However, in the embodiment illustrated in Fig. 4, the contour of the front end portion 54 of the second region 51B (the shape of the boundary line 51C) is semicircular, and consequently, even when large dust comes into contact with a portion of the lower end 23 of the separation wall 20 that corresponds to the portion where the contact angle (θ) is large, the large dust is displaced leftward or rightward along the lower end 23 of the separation wall 20 as the filter 50 is drawn out until the large dust reaches the left side or the right side of the rear portion 57 of the second region 51B. Thus, this large dust has a high remaining probability close to 100%. A possibility that the large dust is stopped by and remains stuck to the portion of the lower end 23 of the separation wall 20 that corresponds to the front end 55 of the second region 51B is extremely low although not zero.

The contour of the front end portion 54 of the second region 51B (the contour of the boundary line 51C at the front end portion 54) is not limited to the shape illustrated in Fig. 4. For example, the front end portion 54 may have a desired contour having an apex at the position of the front end 55, a left portion 56L extending to the left and rear from the apex, and a right portion 56R extending to the right and rear from the apex. Examples of the contour of the front end portion 54 include a circular arc as illustrated in Fig. 4, an elliptical arc, part of a sine curve, part of a quadratic curve, and straight lines. The left portion 56L and the right portion 56R may have different shapes. It is also preferable that shapes of the left portion 56L and the right portion 56R be determined to make an angle between the tangent to each of the left portion 56L and the right portion 56R and the filter drawing direction (this angle corresponds to the contact angle (θ) defined above) gradually smaller rearward. It is also preferable that a width W1 of the front end portion 54 of the second region 51B in the lateral direction be gradually smaller toward the front end 55. Although the front end portion 54 of the second region 51B is preferably bilaterally symmetrical, the front end portion 54 may not necessarily be bilaterally symmetrical.

Although in the illustrated embodiment, the front end portion 22 of the separation wall 20 has such a tongue shape that an upper surface of the front end portion 22 is gradually higher rearward, as obvious from Figs. 1 and 2 in particular, this should not be construed in a limiting sense. For example, the upper surface of the front end portion 22 of the separation wall 20 may be inclined in such a manner that a center portion of the front end portion 22 of the separation wall 20 in the lateral direction is made highest, and that the height is gradually decreased leftward and rightward from the highest portion (ridge). As another alternative, the front end portion 22 of the separation wall 20 may have a configuration like a flanger used for a snowplow (specifically, for example, a configuration in which two plate-shaped members are coupled along a ridgeline, and each of the plate-shaped members is gradually lower leftward (rightward) and gradually lower forward) . Although there is a possibility that large dust runs onto the front end portion 22 of the separation wall 20, the above-described configuration is adopted to make large dust move along the inclination and drop onto the filter 50 even when the large dust temporarily runs onto the front end portion 22.

As illustrated in the arrangement of Fig. 5C, which is not part of the invention, the first region 51A and the second region 51B may be arranged without dividing the first region 51A on the rear. This case satisfies the condition 1, and setting the contact angle (θ) at a sufficiently small value makes it possible to sufficiently raise the remaining probability of large dust L3. It should be noted that in the case of adopting the arrangement in Fig. 5C, the outside air inlet is disposed on the right, and the inside air inlets are disposed on the left so as to smoothen air flows in the air intake housing 10. That is, the arrangement in Fig. 5C is rather preferably applied to an embodiment in which an outside air inlet is disposed on the right, and an inside air inlet is disposed on the left than applied to the embodiment illustrated in Fig. 1 in which the outside air inlet is disposed in front, and the inside air inlets are disposed on the rear. Then, although not elaborated here, the first switching door 18 and the second switching door 19 are open and closed not in the fore-and-aft direction as illustrated in Fig. 1 but in the lateral direction, and the communication hole 21 is also open in the lateral direction.

### Description of Reference Numerals and Signs

- 10:: air intake housing
- 11:: outside air inlet
- 12, 13:: inside air inlet
- 14:: filter support
- 15:: filter insertion hole
- 16A:: first space
- 16B:: second space
- 18:: first switching door
- 19:: second switching door
- 20:: separation wall
- 21:: communication hole
- W2:: lateral width
- 30:: scroll housing
- 31:: suction hole
- Ax:: rotation axis
- 40:: impeller
- 41:: blade cascade
- 41A:: first rotation-axis direction portion
- 41B:: second rotation-axis direction portion
- 50:: filter
- 51:: air inflow surface
- 51A:: first region
- 51B:: second region
- 52:: air outflow surface
- 53:: rear edge
- 53C:: center portion
- 53L:: left portion
- 53R:: right portion
- 54:: front end portion
- W1:: lateral width
- 55:: front end
- 56L:: left portion
- 56R:: right portion
- 58:: front edge
- 60:: separation cylinder
- 61:: downstream end
- 62:: upstream end

## Claims

1. A blower for a vehicular air conditioner, the blower comprising:
an air intake housing (10) comprising:
an outside air inlet (11) configured to take in outside air;
at least one inside air inlet (12, 13) configured to take in inside air;
a filter support (14) configured to support a filter (50) through which air taken in from one or both of the outside air inlet (11) and the at least one inside air inlet (12, 13) passes, the filter support (14) supporting the filter (50) to make an air inflow surface (51) of the filter face upward; and
a filter insertion hole (15) through which the filter (50) is inserted in the filter support (14),
a scroll housing (30) comprising a suction hole (31) configured to draw in the air that has passed through the filter (50):
an impeller (40) accommodated in the scroll housing (30) and drivingly rotated about a rotation axis (Ax);
a separation wall (20) configured to divide a space inside of the air intake housing (10) and above the air inflow surface (51) of the filter (50) into a first space (16A) and a second space (16B), the separation wall (20) comprising a lower end (23) configured to divide the air inflow surface (51) into a first region (51A) facing the first space and a second region (51B) facing the second space;
a plurality of switching doors disposed in the air intake housing (10) to select air to be taken into the first space (16A) from inside air and outside air and to select air to be taken into the second space (16B) from inside air and outside air, the plurality of switching doors at least comprising:
a first switching door (18); and
a second switching door (19); and
a separation cylinder (60) inserted in the scroll housing (30) through the suction hole (31) and comprising:
a downstream end (61) located inside of a blade cascade (41) of the impeller (40); and
an upstream end (62) open to a vicinity of a downward-facing air outflow surface (52) of the filter (50), the separation cylinder (60) being disposed in such a manner that air that has passed through the first region (51A) of the filter (50) passes outside of the separation cylinder (60) and flows into a first rotation-axis direction portion (41A) of the blade cascade (41) of the impeller (40), and that air that has passed through the second region (51B) of the filter (50) passes inside of the separation cylinder (60) and flows into a second rotation-axis directior portion (41B) of the blade cascade of the impeller (40),
wherein when at least outside air is taken into the air intake housing (10), the outside air is taken at least into the first space (16A), and when at least inside air is taken into the air intake housing (10), the inside air is taken at least into the second space (16B), and
wherein supposing that when the air inflow surface (51) of the filter (50) is viewed from an upper side, a side far from the filter insertion hole (15) is referred to as a front, and a side close to the filter insertion hole (15) is referred to as a rear, the first region (51A) continuously extends from a front edge (58) to a rear edge (53) of the air inflow surface of the filter (50), and
the second region (51B) continuously extends from a front end (55) of the second region (51B) to the rear edge (53),
**characterized in that** the front end (55) of the second region (51B) is located behind the front edge (58) of the air inflow surface (51) of the filter (50), and supposing that a left side when the front is viewed from the filter insertion hole (15) is referred to as a left, and that a right side when the front is viewed from the filter insertion hole (15) is referred to as a right, a rear end of the second region (51B) is located at a center portion (53C) of the rear edge (53) of the air inflow surface (51) of the filter (50) in a lateral direction, and the first region (51A) extends rearward from the entire front edge (58) of the air inflow surface of the filter (50), is divided into two separate portions extending rearward on the left and the right of the second region (51B), and terminates at a left portion (53L) and a right portion (53R) of the rear edge (53) of the air inflow surface of the filter (50).

2. The blower according to claim 1, wherein when the air inflow surface (51) of the filter (50) is viewed from an upper side, a front end portion (54) of the second region (51B) has a lateral width (W1) gradually decreased toward the front end (55).

3. The blower according to claim 2, wherein a contour of the front end portion (54) of the second region (51B) comprises an apex at a position of the front end (55), a left portion (56L) extending to the left and rear from the apex, and a right portion (56R) extending to the right and rear from the apex.

4. The blower according to any one of claims 1 to 3, wherein the separation wall (20) comprises a communication hole (21) configured to allow the first space (16A) and the second space (16B) to communicate with each other, and the second switching door (19) is configured to open and close the communication hole (21).

5. The blower according to claim 4, wherein a lateral width (W2) of the communication hole (21) is gradually increased as a distance from the air inflow surface (51) of the filter (50) is increased.

6. The blower according to claim 4 or 5, wherein the air intake housing (10) comprises a first inside air inlet (12) and a second inside air inlet (13) as the at least one inside air inlet, the outside air inlet (11) and the first inside air inlet (12) are open toward the first space (16A), anc the second inside air inlet (13) is open toward the second space (16B), the first switching door (18) is configured to open one of the outside air inlet (11) and the first inside air inlet (12) and close another of the outside air inlet (11) and the first inside air inlet (12), and the second switching door (19) is configured to open one of the communication hole (21) and the second inside air inlet (13) and close another of the communication hole (21) and the second inside air inlet (13).

7. The blower according to any one of claims 1 to 6, wherein the first switching door (18) is a rotary door, and the second switching door (19) is a cantilever door.

## Patentansprüche

1. Gebläse für eine Fahrzeugklimaanlage, wobei das Gebläse umfasst:
ein Lufteinlassgehäuse (10), umfassend:
einen Außenlufteintritt (11), der ausgelegt ist, Außenluft einzulassen;
mindestens einen Innenlufteintritt (12, 13), der ausgelegt ist, Innenluft einzulassen;
eine Filterhalterung (14), die ausgelegt ist, einen Filter (50) zu halten, durch den Luft, die von einem oder beiden des Außenlufteintritts (11) und des mindestens einen Innenlufteinlasses (12, 13) eingelassen wird, passiert, wobei die Filterhalterung (14) den Filter (50) derart hält, dass eine Lufteinströmungsfläche (51) des Filters nach oben weist; und
eine Filtereinsetzöffnung (15), durch die der Filter (50) in die Filterhalterung (14) eingesetzt wird,
ein Spiralgehäuse (30), das eine Ansaugöffnung (31) umfasst, die ausgelegt ist, die Luft, die durch den Filter (50) passiert ist, einzuziehen:
ein Laufrad (40), das in dem Spiralgehäuse (30) untergebracht und antreibend um eine Drehachse (Ax) gedreht wird;
eine Trennwand (20), die ausgelegt ist, einen Raum innerhalb des Lufteinlassgehäuses (10) und über der Lufteinströmungsfläche (51) des Filters (50) in einen ersten Raum (16A) und einen zweiten Raum (16B) zu unterteilen, wobei die Trennwand (20) ein unteres Ende (23) umfasst, das ausgelegt ist, die Lufteinströmungsfläche (51) in einen ersten Bereich (51A), der dem ersten Raum zugewandt ist, und einen zweiten Bereich (51B), der dem zweiten Raum zugewandt ist, zu unterteilen;
eine Mehrheit von Schalttüren, die in dem Lufteinlassgehäuse (10) angeordnet sind, um auszuwählen, dass Luft aus Innenluft und Außenluft in den ersten Raum (16A) eingelassen werden soll, und um auszuwählen, dass Luft von Innenluft und Außenluft in den zweiten Raum (16B) eingelassen werden soll, wobei die Mehrheit von Schalttüren mindestens umfasst:
eine erste Schalttür (18); und
eine zweite Schalttür (19); und
einen Trennzylinder (60), der in das Spiralgehäuse (30) durch die Ansaugöffnung (31) eingesetzt ist und umfasst:
ein stromabwärtiges Ende (61), das sich innerhalb eines Schaufelgitters (41) des Laufrads (40) befindet; und
ein stromaufwärtiges Ende (62), das zu einer Nähe einer nach unten weisenden Luftausströmungsfläche (52) des Filters (50) offen ist, wobei der Trennzylinder (60) auf derartige Weise angeordnet ist, dass Luft, die durch den ersten Bereich (51A) des Filters (50) passiert ist, außerhalb des Trennzylinders (60) passiert und in einen ersten Drehachsenrichtungsabschnitt (41A) des Schaufelgitters (41) des Laufrads (40) strömt, und dass Luft, die durch den zweiten Bereich (51B) des Filters (50) passiert ist, innerhalb des Trennzylinders (60) passiert und in einen zweiten Drehachsenrichtungsabschnitt (41B) des Schaufelgitters des Laufrads (40) strömt,
wobei, wenn zumindest Außenluft in das Lufteinlassgehäuse (10) eingelassen wird, die Außenluft zumindest in den ersten Raum (16A) eingelassen wird, und wenn zumindest Innenluft in das Lufteinlassgehäuse (10) eingelassen wird, die Innenluft zumindest in den zweiten Raum (16B) eingelassen wird, und
wobei, angenommen dass, wenn die Lufteinströmungsfläche (51) des Filters (50) von einer Oberseite betrachtet wird, eine Seite, die von der Filtereinsetzöffnung (15) entfernt ist, als eine Vorderseite bezeichnet wird, und eine Seite nahe an der Filtereinsetzöffnung (15) als eine Hinterseite bezeichnet wird, sich der erste Bereich (51A) durchgehend von einer Vorderkante (58) zu einer Hinterkante (53) der Lufteinströmungsfläche des Filters (50) erstreckt, und sich der zweite Bereich (51B) durchgehend von einem vorderen Ende (55) des zweiten Bereichs (51B) zu der Hinterkante (53) erstreckt,
**dadurch gekennzeichnet, dass** sich das vordere Ende (55) des zweiten Bereichs (51B) hinter der Vorderkante (58) der Lufteinströmungsfläche (51) des Filters (50) befindet, und, angenommen, dass eine linke Seite, wenn die Vorderseite von der Filtereinsetzöffnung (15) betrachtet wird, als links bezeichnet wird, und dass eine rechte Seite, wenn die Vorderseite von der Filtereinsetzöffnung (15) betrachtet wird, als rechts bezeichnet wird, sich ein hinteres Ende des zweiten Bereichs (51B) an einem Mittelabschnitt (53C) der Hinterkante (53) der Lufteinströmungsfläche (51) des Filters (50) in einer lateralen Richtung befindet, und der erste Bereich (51A) sich nach hinten von der gesamten Vorderkante (58) der Lufteinströmungsfläche des Filters (50) erstreckt, in zwei separate Abschnitte getrennt ist, die sich links und rechts von dem zweiten Bereich (51B) nach hinten erstrecken, und an einem linken Abschnitt (53L) und einem rechten Abschnitt (53R) der Hinterkante (53) der Lufteinströmungsfläche des Filters (50) endet.

2. Gebläse nach Anspruch 1, wobei, wenn die Lufteinströmungsfläche (51) des Filters (50) von einer Oberseite betrachtet wird, ein vorderer Endabschnitt (54) des zweiten Bereichs (51B) eine laterale Breite (W1) aufweist, die sich fortschreitend hin zu dem vorderen Ende (55) verringert.

3. Gebläse nach Anspruch 2, wobei eine Kontur des vorderen Endabschnitts (54) des zweiten Bereichs (51B) einen Scheitel an einer Position des vorderen Endes (55), einen linken Abschnitt (56L), der sich links von und hinter dem Scheitel erstreckt, und einen rechten Abschnitt (56R), der sich rechts von und hinter dem Scheitel erstreckt, umfasst.

4. Gebläse nach einem der Ansprüche 1 bis 3,
wobei die Trennwand (20) eine Verbindungsöffnung (21) umfasst, die ausgelegt ist, zu ermöglichen, dass der erste Raum (16A) und der zweite Raum (16B) miteinander in Verbindung stehen, und wobei die zweite Schalttür (19) ausgelegt ist, die Verbindungsöffnung (21) zu öffnen und zu schließen.

5. Gebläse nach Anspruch 4, wobei sich eine laterale Breite (W2) der Verbindungsöffnung (21) fortschreitend erhöht, während sich ein Abstand von der Lufteinströmungsfläche (51) des Filters (50) erhöht.

6. Gebläse nach Anspruch 4 oder 5, wobei das Lufteinlassgehäuse (10) einen ersten Innenlufteintritt (12) und einen zweiten Innenlufteintritt (13) als den mindestens einen Innenlufteintritt umfasst, wobei der Außenlufteintritt (11) und der erste Innenlufteintritt (12) hin zu dem ersten Raum (16A) offen sind, und der zweite Innenlufteintritt (13) hin zu dem zweiten Raum (16B) offen ist, wobei die erste Schalttür (18) ausgelegt ist, einen des Außenlufteintritts (11) und des ersten Innenlufteintritts (12) zu öffnen und einen anderen des Außenlufteintritts (11) und des ersten Innenlufteintritts (12) zu schließen, und die zweite Schalttür (19) ausgelegt ist, eines der Verbindungsöffnung (21) und des zweiten Innenlufteintritts (13) zu öffnen und ein anderes der Verbindungsöffnung (21) und des zweiten Innenlufteintritts (13) zu schließen.

7. Gebläse nach einem der Ansprüche 1 bis 6, wobei die erste Schalttür (18) eine Drehtür ist, und die zweite Schalttür (19) eine freischwingende Tür ist.

## Revendications

1. Ventilateur pour climatiseur de véhicule, le ventilateur comprenant :
un boîtier d'admission d'air (10) comprenant :
une entrée d'air extérieur (11) configurée pour capter de l'air extérieur ;
au moins une entrée d'air intérieur (12, 13) configurée pour capter de l'air intérieur ;
un support de filtre (14) configuré pour supporter un filtre (50) à travers lequel de l'air aspiré à partir d'une ou des deux de l'entrée d'air extérieur (11) et de l'au moins une entrée d'air intérieur (12, 13) passe, le support de filtre (14) supportant le filtre (50) pour faire en sorte qu'une surface d'écoulement entrant d'air (51) du filtre soit tournée vers le haut ; et
un trou d'insertion de filtre (15) à travers lequel le filtre (50) est inséré dans le support de filtre (14), un boîtier en volute (30) comprenant un trou d'aspiration (31) configuré pour aspirer l'air qui est passé à travers le filtre (50) ;
une turbine (40) logée dans le boîtier en volute (30) et mise en rotation par entraînement autour d'un axe de rotation (Ax) ;
une paroi de séparation (20) configurée pour diviser un espace à l'intérieur du boîtier d'admission d'air (10) et au-dessus de la surface d'écoulement entrant d'air (51) du filtre (50) en un premier espace (16A) et un second espace (16B), la paroi de séparation (20) comprenant une extrémité inférieure (23) configurée pour diviser la surface d'écoulement entrant d'air (51) en une première région (51A) faisant face au premier espace et une seconde région (51B) faisant face au second espace ;
une pluralité de portes de permutation disposées dans le boîtier d'admission d'air (10) pour sélectionner de l'air destiné à être capté dans le premier espace (16A) à partir de l'air intérieur et de l'air extérieur et pour sélectionner de l'air destiné à être capté dans le second espace (16B) à partir de l'air intérieur et de l'air extérieur, la pluralité de portes de permutation comprenant au moins :
une première porte de permutation (18) ; et
une seconde porte de permutation (19) ; et
un cylindre de séparation (60) inséré dans le boîtier en volute (30) à travers le trou d'aspiration (31) et comprenant :
une extrémité aval (61) située à l'intérieur d'une cascade d'aubes (41) de la turbine (40) ; et
une extrémité amont (62) donnant sur un voisinage d'une surface d'écoulement sortant d'air, tournée vers le bas, (52) du filtre (50), le cylindre de séparation (60) étant disposé de manière telle que de l'air qui est passé à travers la première région (51A) du filtre (50) passe à l'extérieur du cylindre de séparation (60) et s'écoule dans une première partie de direction d'axe de rotation (41A) de la cascade d'aubes (41) de la turbine (40), et cet air qui est passé à travers la seconde région (51B) du filtre (50) passe à l'intérieur du cylindre de séparation (60) et s'écoule dans une seconde partie de direction d'axe de rotation (41B) de la cascade d'aubes de la turbine (40), dans lequel lorsqu'au moins de l'air extérieur est capté dans le boîtier d'admission d'air (10), l'air extérieur est capté au moins dans le premier espace (16A), et lorsqu'au moins de l'air intérieur est capté dans le boîtier d'admission d'air (10), l'air intérieur est capté au moins dans le second espace (16B), et
dans lequel, en supposant que, lorsque la surface d'écoulement entrant d'air (51) du filtre (50) est vue depuis un côté supérieur, un côté éloigné du trou d'insertion de filtre (15) est appelé avant, et un côté près du trou d'insertion de filtre (15) est appelé arrière, la première région (51A) s'étend en continu depuis un bord avant (58) jusqu'à un bord arrière (53) de la surface d'écoulement entrant d'air du filtre (50), et
la seconde région (51B) s'étend en continu depuis une extrémité avant (55) de la seconde région (51B) jusqu'au bord arrière (53),
**caractérisé en ce que** l'extrémité avant (55) de la seconde région (51B) est située derrière le bord avant (58) de la surface d'écoulement entrant d'air (51) du filtre (50), et, en supposant qu'un côté gauche, lorsque l'avant est vu depuis le trou d'insertion de filtre (15), est appelé gauche, et qu'un côté droit, lorsque l'avant est vu depuis le trou d'insertion de filtre (15), est appelé droite, une extrémité arrière de la seconde région (51B) est située à une partie centrale (53C) du bord arrière (53) de la surface d'écoulement entrant d'air (51) du filtre (50) dans une direction latérale, et la première région (51A) s'étend vers l'arrière à partir du bord avant entier (58) de la surface d'écoulement entrant d'air du filtre (50), est divisée en deux parties séparées s'étendant vers l'arrière sur la gauche et la droite de la seconde région (51B), et se termine à une partie gauche (53L) et une partie droite (53R) du bord arrière (53) de la surface d'écoulement entrant d'air du filtre (50).

2. Ventilateur selon la revendication 1, dans lequel, lorsque la surface d'écoulement entrant d'air (51) du filtre (50) est vue depuis un côté supérieur, une partie d'extrémité avant (54) de la seconde région (51B) a une largeur latérale (W1) réduite progressivement vers l'extrémité avant (55).

3. Ventilateur selon la revendication 2, dans lequel un contour de la partie d'extrémité avant (54) de la seconde région (51B) comprend un sommet à une position de l'extrémité avant (55), une partie gauche (56L) s'étendant vers la gauche et l'arrière à partir du sommet, et une partie droite (56R) s'étendant vers la droite et l'arrière à partir du sommet.

4. Ventilateur selon l'une quelconque des revendications 1 à 3,
dans lequel la paroi de séparation (20) comprend un trou de communication (21) configuré pour permettre au premier espace (16A) et au second espace (16B) de communiquer l'un avec l'autre, et la seconde porte de permutation (19) est configurée pour ouvrir et fermer le trou de communication (21).

5. Ventilateur selon la revendication 4, dans lequel une largeur latérale (W2) du trou de communication (21) est progressivement augmentée au fur et à mesure qu'une distance depuis la surface d'écoulement entrant d'air (51) du filtre (50) est augmentée.

6. Ventilateur selon la revendication 4 ou 5, dans lequel le boîtier d'admission d'air (10) comprend une première entrée d'air intérieur (12) et une seconde entrée d'air intérieur (13) en tant que l'au moins une entrée d'air intérieur, l'entrée d'air extérieur (11) et la première entrée d'air intérieur (12) sont ouvertes vers le premier espace (16A), et la seconde entrée d'air intérieur (13) est ouverte vers le second espace (16B), la première porte de permutation (18) est configurée pour ouvrir une de l'entrée d'air extérieur (11) et de la première entrée d'air intérieur (12) et fermer une autre de l'entrée d'air extérieur(11) et de la première entrée d'air intérieur (12), et la seconde porte de permutation (19) est configurée pour ouvrir un du trou de communication (21) et de la seconde entrée d'air intérieur (13) et fermer un autre du trou de communication (21) et de la seconde entrée d'air intérieur(13) .

7. Ventilateur selon l'une quelconque des revendications 1 à 6, dans lequel la première porte de permutation (18) est une porte rotative, et la seconde porte de permutation (19) est une porte en porte-à-faux.
